# EUROPEAN PATENT SPECIFICATION

(11) **EP 4 052 930 B1**
(45) Date of publication and mention of the grant of the patent: **16.04.2025**
(21) Application number: 22160298.0
(22) Date of filing: 04.03.2022
(51) Int. Cl.: B60C 11/03, B60C 11/12

(54) **TIRE INCLUDING DISSYMMETERIC SIPE**
REIFEN MIT DISSYMMETRISCHEN LAMELLEN
PNEU COMPRENANT UNE LAMELLE DISSYMÉTRIQUE

(30) Priority: 05.03.2021 KR 20210029356
(43) Date of publication of application: 07.09.2022
(73) Proprietor: HANKOOK TIRE & TECHNOLOGY CO., LTD, Gyeonggi-do 13494 (KR)
(72) Inventor: LEE, Won Bin, Daejeon (KR)
(74) Representative: Stöckeler, Ferdinand

(56) References cited:
- EP-A1- 3 415 343
- DE-A1- 102009 044 829
- FR-A1- 2 763 892
- FR-A1- 2 989 031
- JP-A- 2010 208 428

## Description

### BACKGROUND OF THE INVENTION

### Field of the Invention

The present invention relates to a tire including dissymmetric sipes.

More particularly, the present invention relates to a tire including dissymmetric sipes of which vertical positions of channel parts are different from each other.

### Description of the Related Art

In general, a tire may include a tread which is a part that makes contact with a road surface when a vehicle drives.

Such a tread may be provided with a sipe including a groove for improving braking force, driving force, traction force, anti-slip, and the like.

As for a conventional technology on a tire including a sipe, Korean Patent Publication No. 10-0869025 [Patent Document 1] discloses a technical configuration, in which the width of the sipe varies according to the depth thereof.

However, in the technique according to Patent Document 1, when the tire tread wears down as the travel distance increases, a step difference may be generated due to the difference in the amount of wear of the leading part and the trailing part of the tire.

The generation of the step difference in the tread may lead to vibrations and noise in the vehicle and the deterioration in the wear performance.

As for another conventional technology on a tire including a sipe, Korean Patent Publication No. 10-2011-0056792 [Patent Document 2] discloses a technical configuration in which a spiral portion is formed on an inner wall surface of a channel of a sipe.

However, in the technique according to Patent Document 2, when the tire tread wears down as the travel distance increases, a step difference may also be generated due to the difference in the amount of wear of the leading part and the trailing part of the tire. Documents of Related Art

(Patent Document 1) Korean Patent No. 10-0869025 (Patent Document 2) Korean Patent No. 10-2011-0056792.

Attention is also drawn to the disclosure of DE102009044829 A1 showing a tire comprising oval-shaped channels in its tread.

### SUMMARY

An object of the present invention is to provide a tire including dissymmetric sipes configured to prevent the generation of a step difference even when a tread wears down. The present invention provides for a tire according to claim 1. Further developments of the invention are defined in the dependent claims. Any examples of the description not falling within the scope of the claims do not form part of the invention and are provided for illustrative purposes only.

Further, the total depth (height) of the first sipe part and the second sipe part may be approximately the same.

Further, the sipe part may further include a third sipe part adjacent to either of the first sipe part and the second sipe part, and the third sipe part may include a third channel part extending from the surface of the tread block part and a third rift part connected to the third channel part and positioned under the third channel part.

Further, the third channel part may overlap the first rift part and the 2-1 rift part in the horizontal direction of the tread block part and the third rift part may overlap the first channel part, the first rift part, the second channel part, and the 2-2 rift part in the horizontal direction of the tread block part.

Here, the second channel part may not overlap the third channel part in the horizontal direction.

Further, the total depth (height) of the first sipe part, the second sipe part, and the third sipe part may be approximately the same.

Further, the third channel part may include a third diminishing portion including a portion in which the third channel part has a diminishing width toward the third rift part at a boundary portion between the third channel part and the third rift part and a second maintenance portion positioned between the third diminishing portion and the surface of the tread block part to include a portion of which the width is maintained constant.

The tire including dissymmetric sipes according to the present invention has the effect of checking and/or preventing the generation of a step difference even when the tread wears down.

The tire including the dissymmetric sipes according to the present invention has an effect of improving wet and traction performance.

The tire including the dissymmetric sipes according to the present invention has the effect of reducing the vibrations and noise in the vehicle and checking and/or preventing the deterioration of wear performance.

### BRIEF DESCRIPTION OF THE DRAWINGS

FIGS. 1 and 2 are views for describing a configuration of a tire including dissymmetric sipes according to the present invention.
FIGS. 3 is a view for describing a block part and a sipe part as an example useful for understanding the invention. Fig. 4 to 6 are views for describing a block part and a sipe part.
FIGS. 7 to 11 are views for describing a first example of a dissymmetric sipe part useful for understanding the invention.
FIGS. 12, 13, 14, and 16 are views for describing a second example of the dissymmetric sipe part useful for understanding the invention. Fig. 15 is a view for describing an embodiment of the dissymmetric sipe according to the invention. FIGS. 17is a view for describing a third example of the dissymmetric sipe part useful for understanding the invention. FIGS. 18 and 19 are views for describing embodiments of the dissymmetric sipe according to the invention.

### DETAILED DESCRIPTION OF THE INVENTION

A tire including dissymmetric sipes according to the present invention will be described in detail with reference to the accompanying drawings in the following.

The present invention may be subject to various modifications and have various embodiments, and specific embodiments will be illustrated in the drawings and described in detail in the detailed description.

In describing the present invention, terms such as first, second, etc. may be used to describe various components, but the components may not be limited by the terms. The terms may only be used for the purpose of distinguishing one component from another. For example, without departing from the scope of the present invention, a first component may be denoted as a second component, and similarly, a second component may also be denoted as a first component.

The term "and/or" may include a combination of a plurality of related items listed or any of the plurality of related items listed.

When a component is referred to as being "connected" or "coupled" to another component, the component may be directly connected or coupled to the another component, but it is to be understood that other components may exist in between. On the other hand, when a component is referred to as being "directly connected" or "directly coupled" to another component, it is to be understood that there are no intervening components present.

The terms used herein are used for the purpose of describing specific embodiments only and are not intended to limit the invention. Singular expressions may include plural expressions unless the context explicitly indicates otherwise.

In the present document, terms such as "comprise" or "have" are intended to point out the presence of features, numbers, steps, operations, components, parts, or combinations thereof disclosed in the specification, and it is to be understood that the presence or additional possibilities of one or more of other features, numbers, steps, operations, components, parts or combinations thereof are not precluded in advance.

Unless otherwise defined, all terms used herein, including technical or scientific terms, may have the same meanings as are generally understood by those skilled in the art to which the present invention pertains. The terms such as those defined in commonly used dictionaries may be interpreted as having meanings consistent with their meanings in the context of the related technology and may not be interpreted in an idealized or overly formal sense unless expressly so defined herein.

In addition, the embodiments disclosed in the present document are provided for a better description to those skilled in the art, and the shapes and sizes of the elements in the drawings may be exaggerated for a clearer description.

In describing the present invention, the present document may omit the detailed description when it is determined that a specific description of a related well-known function or configuration may unnecessarily obscure the point of the present invention.

In the following, a first direction DR1 (also called axial direction) may be a direction along the width (breadth) of the block part of the tread part. The first direction DR1 may be referred to as a breadth direction or width direction.

A second direction DR2 (also called circumferential direction) may be a direction along the length (longitude) of the block part
of the tread part. The second direction DR2 may be referred to as a longitudinal direction or length direction.

A third direction DR3 (also called radial direction) may be a direction along the height (depth) of the block part of the tread part. The third direction DR3 may be referred to as a vertical direction or depth direction.

The first direction DR1 may (perpendicularly) cross the second direction DR2 and the third direction DR3, and the second direction DR2 may (perpendicularly) cross the third direction DR3.

The first direction DR1 and the second direction DR2 may be collectively referred to as the horizontal direction DRH (also called circumferential and/or axial direction).

The third direction DR3 may be referred to as the vertical direction DRV.

The circular direction DRC may (perpendicularly) crosses the axle and mean an extending direction along an edge of the tread surface.

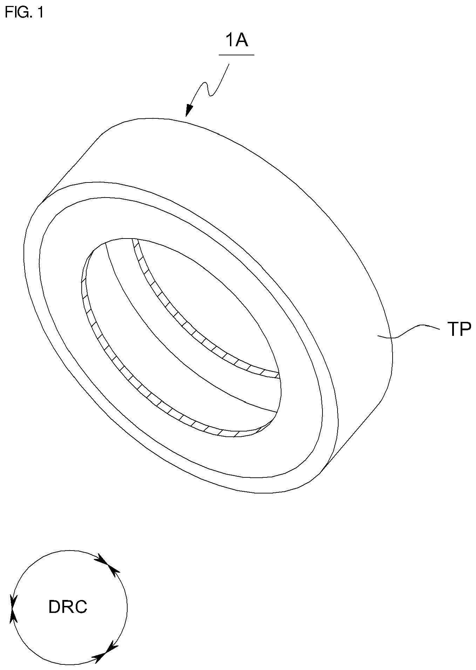

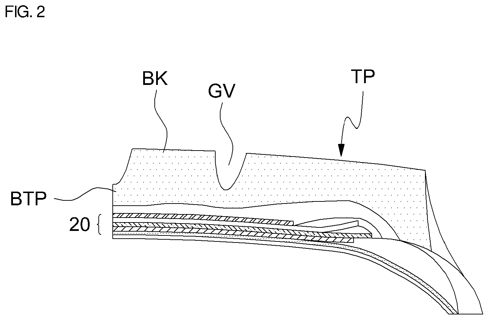

FIGS. 1 and 2 are views for describing a configuration of a tire including dissymmetric sipes according to the present invention.

FIGS. 1 and 2 show that a tire 1A (hereinafter, possibly referred to as a 'tire') including dissymmetric sipes according to the present invention may include a tread part TP including a portion making contact with a road surface.

The tread part TP may include a rubber composition having excellent wear resistance to cope with friction with the road surface.

The tire 1A in the present invention may be of any type as long as the tire includes the tread part TP. For example, the tire 1A may be of any type such as a pneumatic tire, a heavy-load pneumatic tire, or a non-pneumatic tire under the condition that the tire includes the tread part TP.

Considering that the block part BK is often applied to the tread part TP of the heavy-load pneumatic tire applied to medium-to-large vehicles such as buses, trucks, and the like, it may be preferable for the tire 1A in the present invention to be a heavy-load tire.

FIG. 2 shows that the tread part TP includes a base tread part BTP, a tread block part BK (hereinafter, possibly referred to as 'block part'), a groove part GV, and a sipe part (not illustrated).

The base tread part BTP includes a portion positioned on the edge of the tire 1A in the circular direction DRC to have a ring shape.

The block part BK is formed on an outer surface of the base tread part BTP.

In addition, the base tread part BTP includes a plurality of block parts BK.

The base tread part BTP and the tread block part BK may be integrally formed.

The groove part GV is formed between the tread block parts BK.

The groove part GV may be formed in various patterns.

Forming such a groove part GV may improve the wet performance of the tire 1A.

The reference numeral 20, not described, in FIG. 2 may be a belt part including at least one one belt layer.

The belt part 20 may improve the structural stability of the tire 1A.

Although not illustrated, the sipe part is formed in at least one block part BK. The sipe part will be described in detail below with reference to the accompanying drawings.

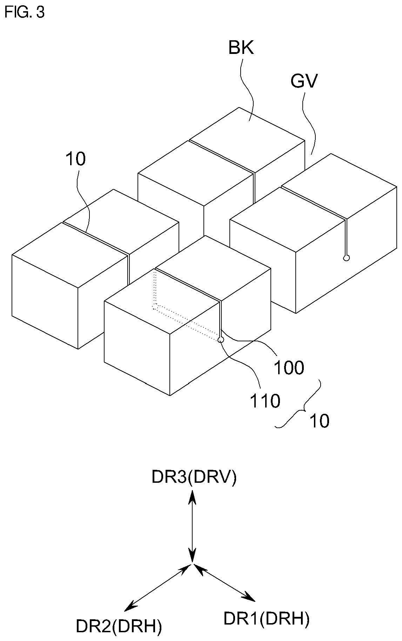

FIGS. 3 to 6 are views for describing the block part and the sipe part. The description of the portions described in detail above may be omitted in the following.

FIG. 3 shows an example useful for understanding the invention, wherein the sipe part 10 is formed in the block part BK.

The sipe part 10 includes a rift part 100 and a channel part 110.

The sipe part 10 may also be referred to as a kerf part. The 'sipe' may have the same meaning as the 'kerf' in the present invention.

The rift part 100 includes a gap in the tread block part BK.

The channel part 110 is formed inside the tread block part BK and be connected to the rift part 100.

The rift part 100 extends from the surface of the tread block part BK to the channel part 110.

In addition, the width of the channel part 110 is greater than the width of the rift part 100.

Here, the 'width' may refer to the width of the block BK in the horizontal direction DRH (the first direction DR1 or the second direction DR2).

FIG. 3 exemplifies the cross-section of the block part BK being rectangular in the horizontal direction DRH (the first direction DR1 or the second direction DR2), but the present invention is not limited thereto.

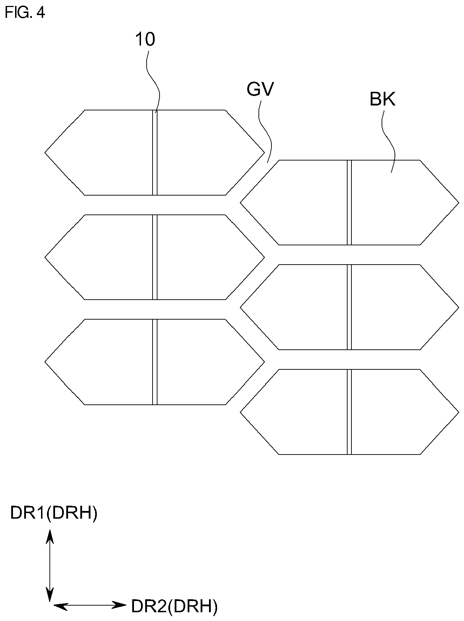

For example, as illustrated in FIG. 4, the cross-section of the block part BK may be hexagonal in the horizon direction DRH.

As described above, the shape of the block part BK may be variously modified in the present invention.

On the other hand, the formation direction of the sipe part 10 may be variously modified in the present invention.

For example, as illustrated in FIG. 3, the sipe part may be formed in the first direction DR1, that is, the width direction or breadth direction of the block part BK, among the horizontal directions DRH in the block part BK.

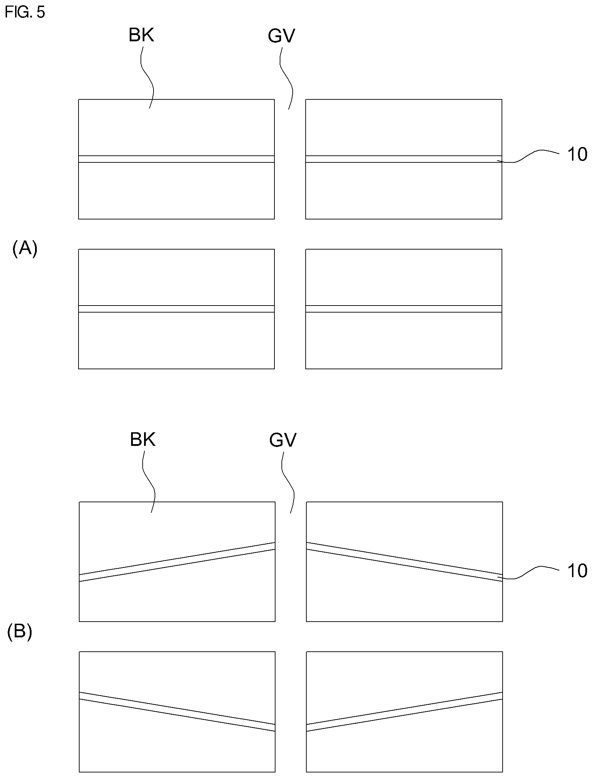

Alternatively, as illustrated in FIG. 5A, the sipe part may be formed in the second direction DR2, that is, the length direction or longitudinal direction of the block part BK, among the horizontal directions DRH in the block part BK.

Alternatively, as illustrated in FIG. 5B, the sipe part may be formed in an oblique direction in the block part BK.

On the other hand, the shape of the sipe part 10 may be variously modified in the block part BK in the present invention.

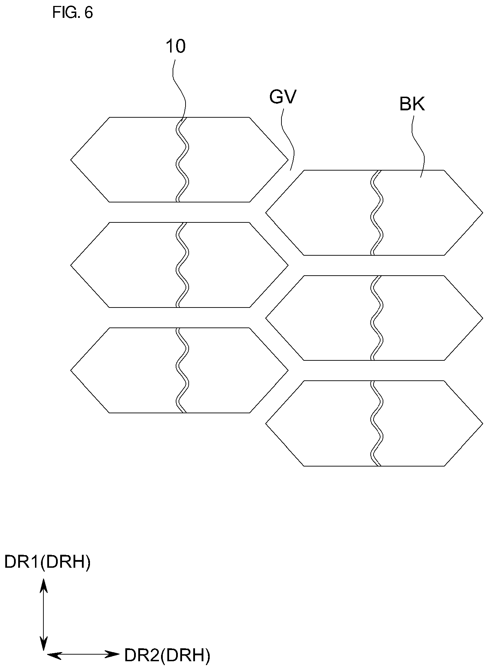

For example, as illustrated in FIG. 6, the sipe part 10 may have a zigzag shape similar to a spiral shape.

The sipe part 10 is of a dissymmetric type in the present invention, as is described below with reference to the accompanying drawings.

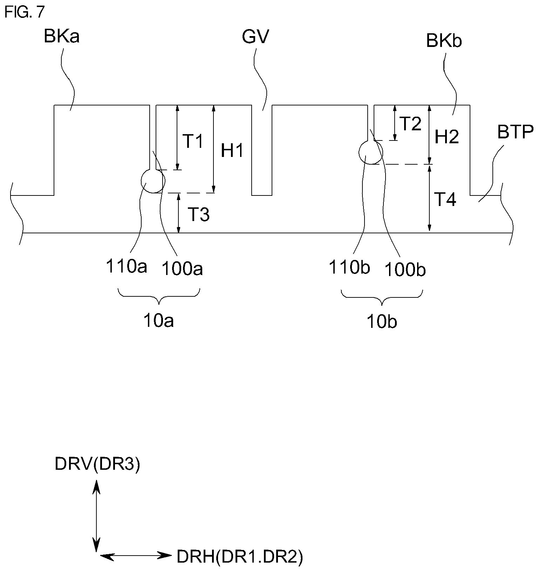

FIGS. 7 to 11 are views for describing a first example of a dissymmetric sipe part useful for understanding the invention. The description of the portion described in detail above may be omitted in the following.

The vertical (also called radial) positions of the channel parts 110 of at least two sipe parts 10 are different from each other in the tire 1A according to the present invention.

For example, as illustrated in FIG. 7, the vertical position of a first channel part 110a of a first sipe part 10a formed in a first block part BKa and the vertical position of a second channel part 110b of a second sipe part 10b formed in a second block part BKb are different from each other.

The first sipe part 10a includes a first rift part 100a and the first channel part 110a.

The first rift part 100a extends from the surface of the first block part BKa.

The first channel part 110a is positioned under (also called radially inward) the first rift part 100a and be connected to the first rift part 100a.

The width W2 of the first channel part 110a of the first sipe part 10a is greater than the width W1 of the first rift part 100a.

The second sipe part 10b includes a second rift part 100b and the second channel part 110b.

The second rift part 100a extends from the surface of the second block part BKb.

The second channel part 110b is positioned under the second rift part 100b and is connected to the second rift part 100b.

The width of the second channel part 110b of the second sipe part 10b is greater than the width of the second rift part 100b.

The length T1 (height) of the first rift part 100a in the vertical direction DRV (the third direction DR3) in the first sipe part 10a is different from the length T2 (height) of the second rift part 100b in the vertical direction DRV in the second sipe part 10b. For example, the length T1 of the first rift part 100a in the vertical direction DRV in the first sipe part 10a may be greater than the length T2 of the second rift part 100b in the vertical direction DRV in the second sipe part 10b.

Accordingly, the vertical position of the first channel part 110a connected to the end of the first rift part 100a of the first sipe part 10a and the vertical position of the second channel part 110b connected to the end of the second rift part 100b of the second sipe part 10b is different from each other.

More specifically, the vertical position of the first channel part 110a of the first sipe part 10a from the surface of the first block part BKa and the vertical position of the second channel part 110b of the second sipe part 10b from the surface of the second block part BKb are different from each other.

On the other hand, the vertical position of the first channel part 110a and the vertical position of the second channel part 110b, viewed from the base tread part BTP, are different from each other.

For example, the first channel part 110a of the first sipe part 10a is spaced apart from the base tread part BTP by T3 and the second channel part 110b of the second sipe part 10b is spaced apart from the base tread part BTP by T4.

From another point of view, the vertical position of the first channel part 110a of the first sipe part 10a from the base tread part BTP and the vertical position of the second channel part 110b of the second sipe part 10b from the base tread part BTP are different from each other.

In this case, the total depth H1, that is, the length H1 in the vertical direction DRV, of the first sipe part 10A may be greater than the total depth H2, that is, the length H2 in the vertical direction DRV, of the second sipe part 10b.

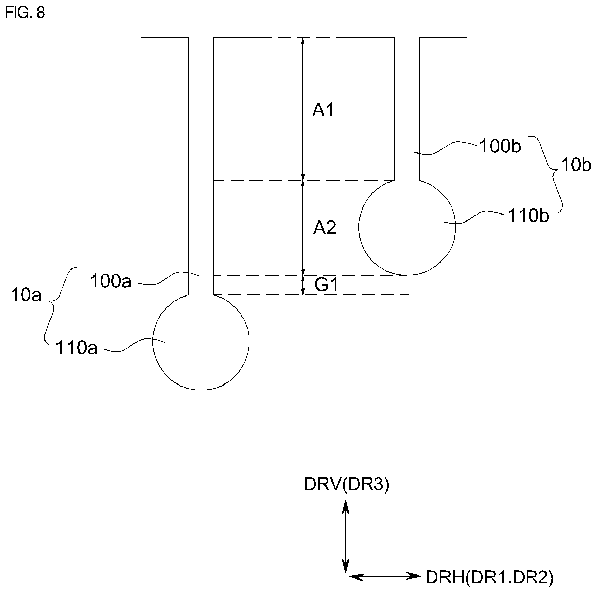

A more detailed comparison between the first sipe part 10a and the second sipe part 10b shows that, as illustrated in FIG. 8 as an example useful for understanding the invention, the firsts rift part 100a and the second rift part 100b overlap each other in the horizontal direction DRH in a region A1.

The region A1 may be adjacent to the surface of the block part BK.

The first rift part 100a and the second channel part 110b overlap each other in a region A2 positioned under the region A1 with respect to the surface of the block part BK.

In this case, the first channel part 110a and the second channel part 110b may be spaced apart from each other by a predetermined distance in the vertical direction DRV. That is, the first channel part 110a and the second channel part 110b may not overlap each other in the vertical direction DRV.

When the vertical positions of the channel part 110 are different from each other in at least two sipe parts 10 as described above, the generation of a step difference may be prevented or checked even when the block part BK wears down.

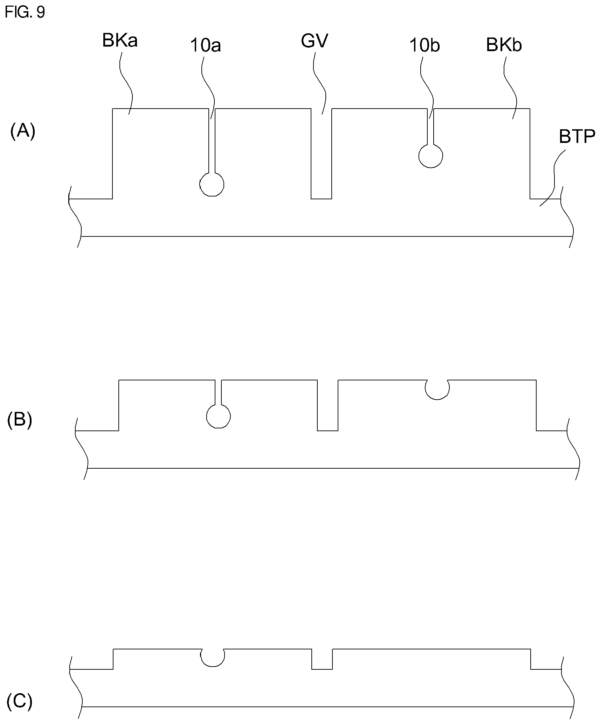

For example, as illustrated in FIG. 9A as an example useful for understanding the invention, the first rift part 100a and the second rift part 100b may be exposed on the surfaces of the first block part BKa and the second block part BKb during the initial use period of the tire 1A.

Thereafter, when the use period of the tire 1A increases and the tread part TP wears down, as illustrated in FIG. 9B, the first rift part 100a is exposed in the first block part BKa and the second channel part 110b may be exposed in the second block part BKb. In this case, the tire 1A may be in the middle use period.

Thereafter, when the use period of the tire 1A further increases and the tread part TP further wears down, as illustrated in FIG. 9C, the first channel part 110a may be exposed in the first block part BKa. In this case, the tire 1A may be in the terminal use period.

At least two block parts BK may show different patterns depending on the degree of wear of the tread part TP, as described above.

Accordingly, fixation of wear patterns of the block parts BK may be checked or prevented, thereby checking or preventing the generation of step difference in the tread parts TP.

Unlike the present invention, it may be assumed that the first sipe 10a formed in the first block part BKa and the second sipe 10b formed in the second block part BKb are the same.

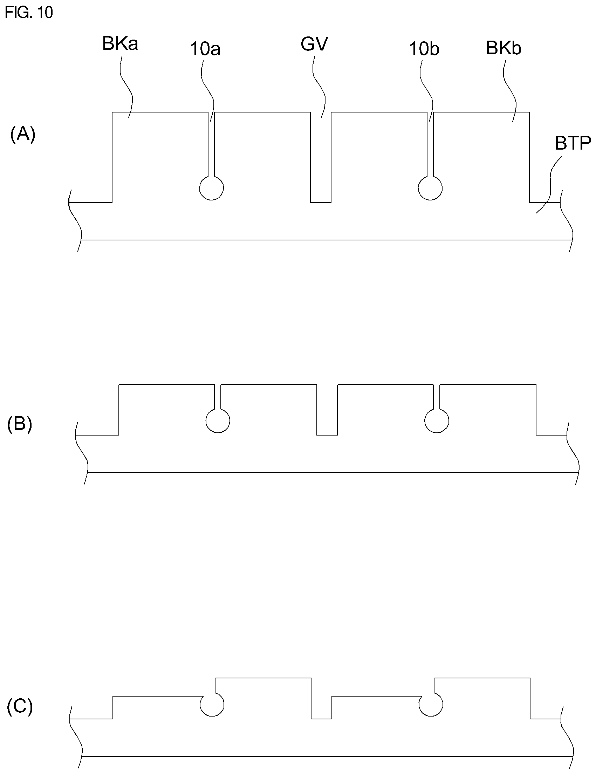

In this case, as illustrated in FIGS. 10A, 10B, and 10C, the surfaces of the first block part BKa and the second block part BKb may be similar or the same in the initial A, middle B, and terminal C use periods of the tire 1A.

Accordingly, the wear pattern of the tread part TP may be fixed in the initial A, middle B, and terminal C use periods of the tire 1A, thereby further aggravating wear in certain portions of the tread part TP relatively and slowing down wear in other portions relatively.

Accordingly, a step difference may be generated in the tread part TP.

FIG. 10C illustrates an example of the step difference generated in the tread part TP.

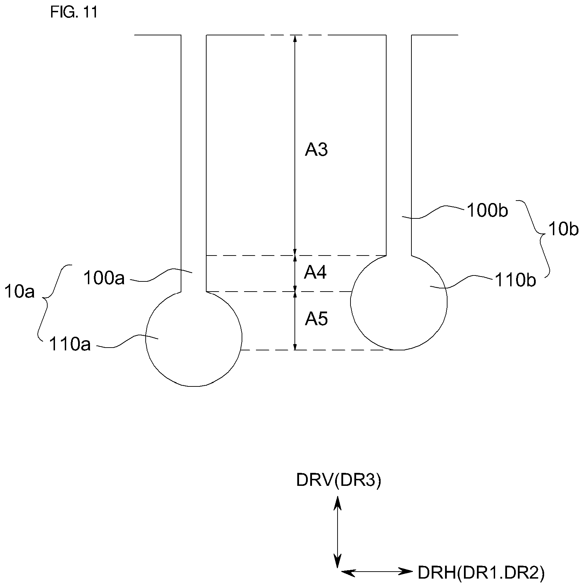

FIG. 11 shows an example useful for understanding the invention, wherein the first channel part 110a of the first sipe part 10a and the second channel part 110b of the second sipe part 10b overlap each other in the vertical direction DRV.

For example, the first rift part 100a and the second rift part 100b overlap each other in the horizontal direction DRH in a region A3.

The region A3 is adjacent to the surface of the block part BK.

The first rift part 100a and the second channel part 110b overlap each other in a region A4 positioned under the region A3 with respect to the surface of the block part BK.

The first channel part 110a and the second channel part 110b may overlap each other in a region A5 positioned under the region A4 with respect to the surface of the block part BK.

In this case, fixation of the wear pattern of the tread part TP may be checked or prevented, thereby checking or preventing the generation of step difference caused by wear of the tread part TP.

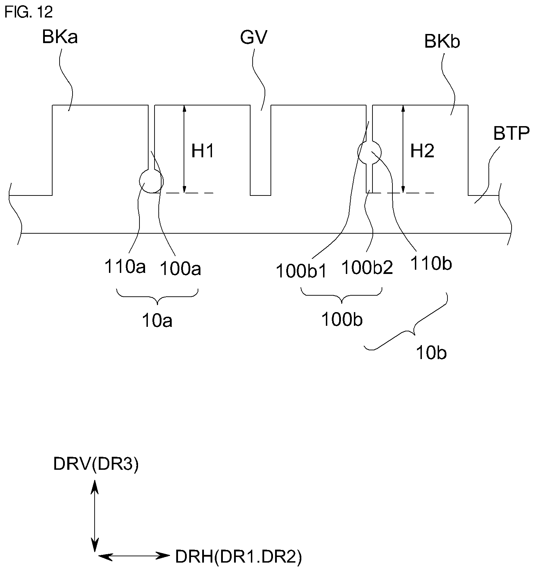

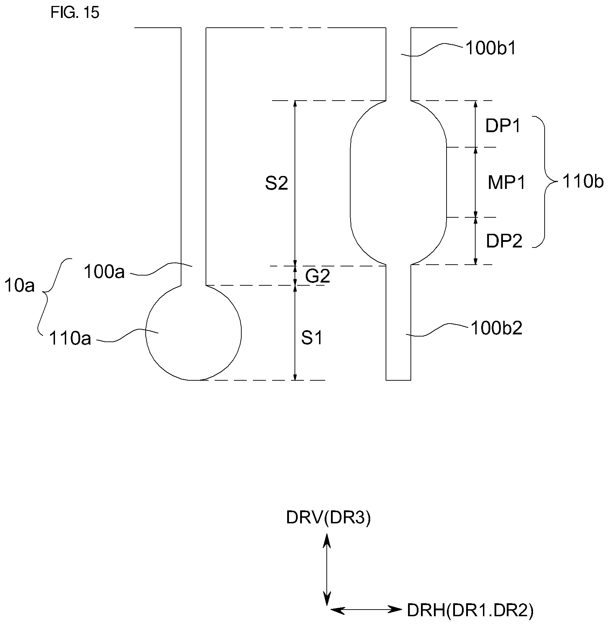

FIGS. 12, 13, 14, and 16 are views for describing a second example of the dissymmetric sipe parts useful for understanding the invention. Fig. 15 is a view for describing an embodiment of the dissymmetric sipe according to the invention. The description of portions described in detail above may be omitted in the following.

FIG. 12 shows that the second sipe part 10b may include a 2-1 rift part 100b1 (also called first rift part portion 100b1), a second channel part 110b, and a 2-2 rift part 100b2 (also called second rift part portion 100b2).

Comparison of FIG. 12 with FIG. 7 shows that the second sipe part 10b may further include another riftpart.

The 2-1 rift part 100b1 is adjacentto the surface of the second block part BKb and extends to the surface of the second block part BKb.

The second channel part 110b is positioned under the 2-1 rift part 100b1, and the second channel part 110b is connected to a lower portion of the 2-1 rift part 100b1.

The 2-2 rift part 100b2 is positioned under the second channel part 110b, and the 2-2 rift part 100b2 is connected to a lower portion of the second channel part 110b.

The second channel part 110b is positioned between the 2-1 rift part 100b1 and the 2-2 rift part 100b2.

In this case, the vertical position of the first channel part 110a of the first sipe part 10a and the vertical position of the second channel part 110b of the second sipe part 10b are different from each other.

In addition, the total depth H1, that is, the length H1 in the vertical direction DRV, of the first sipe part 10a may be substantially the same as the total depth H2, that is, the length H2 in the vertical direction DRV, of the second sipe part 10b.

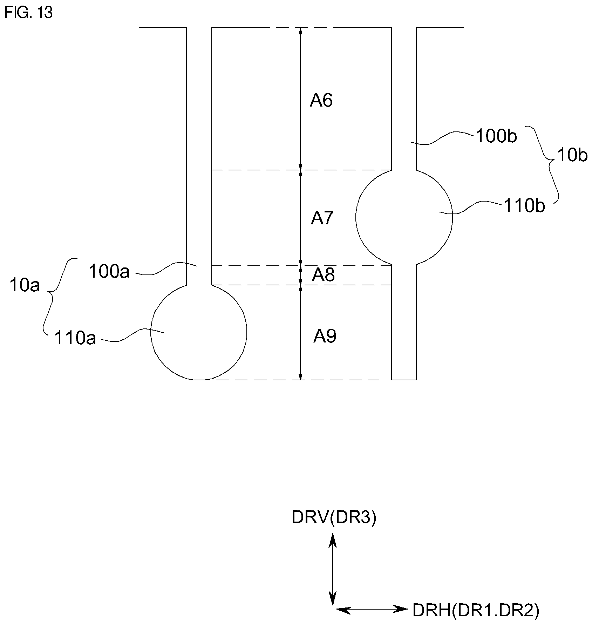

FIG. 13 shows an example useful for understanding the invention, wherein the first rift part 100a and the 2-1 rift part 100b1 overlap each other in the horizontal direction DRH in a region A6 adjacent to the surface of the block part BK.

The first rift part 100a and the second channel part 110b overlap each other in a region A7 positioned under the region A6 with respect to the surface of the block part BK.

The first rift part 100a and the 2-2 rift part 100b2 may overlap each other in a region A8 positioned under the region A7 with respect to the surface of the black part BK.

The first channel part 110a and the 2-2 rift part 1 00b2 overlap each other in a region A9 positioned under the region A8 with respect to the surface of the block part BK.

FIG. 13 shows that the first channel part 110a of the first sipe part 10a and the second channel part 110b of the second sipe part 10b overlap each other in the vertical direction DRV.

In this case, the generation of the step difference may be checked or prevented even when the block part BK wears down.

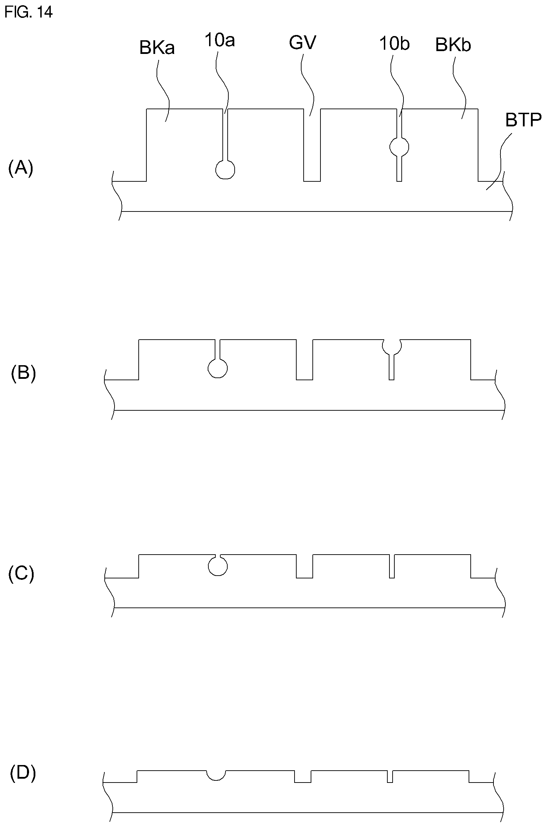

For example, as illustrated in FIG. 14A an example useful for understanding the invention, the first rift part 100a and the 2-1 rift part 100b1 may be exposed on the surfaces of the first block part BKa and the second block part BKb in the initial use period of the tire 1A,

Thereafter, when the use period of the tire 1A increases and the tread part TP wears down, as illustrated in FIG. 14B, the first rift part 100a may be exposed in the first block part BKa and the second channel part 110b may be exposed in the second block part BKb. In this case, the tire 1A may be in a first middle use period.

Thereafter, when the tread part TP further wears down, as illustrated in FIG. 14C, the first rift part 100a may be exposed in the first block part BKa and the2-2 rift part 100b2 may be exposed in the second block part BKb. In this case, the tire 1A may be in a second middle use period.

Thereafter, when the tread part TP further wears down, as illustrated in FIG. 14D, the first channel part 110a may be exposed in the first block part BKa and the 2-2 rift part 100b2 may be exposed in the second block part BKb. In this case, the tire 1A may be in the terminal use period.

At least two block parts BK may have different patterns depending on the degree of wear of the tread part TP as described above, thereby checking or preventing the generation of step difference in the tread part TP.

On the other hand, the first channel part 110a of the first sipe part 10a and the second channel part 110b of the second sipe part 10b have different shapes.

For example, the cross-section of the first channel part 110a in the vertical direction DRV may have a circular shape, and the cross-section of the second channel part 110b in the vertical direction DRV may have a shape similar to an ellipse.

In this case, the height S2 of the second channel part 110b in the vertical direction DRV is greater than the height S1 of the first channel part 110a.

In addition, the first channel part 110a and the second channel part 110b may be spaced apart from each other by a predetermined distance G2 and may overlap each other depending on the design.

A more detailed look at the shape of the second channel part 110b shows that the second channel part 110b includes a first diminishing portion DP1, a second diminishing portion DP2, and a first maintenance portion MP1.

Here, the first diminishing portion DP1 includes a portion of which the width gradually diminishes toward the 2-1 rift part 100b1 in the boundary portion between the second channel part 110b and the 2-1 rift part 100b1.

The second diminishing portion DP2 includes a portion of which the width gradually diminishes toward the 2-2 rift part 100b2 in the boundary portion between the second channel part 110b and the 2-2 rift part 100b2.

The first maintenance portion MP1 is positioned between the first diminishing portion DP1 and the second diminishing portion DP2 and have a portion of which the width is maintained constant.

As described above, when the length S2 (height) of the second channel part 110b in the vertical direction DRV is greater than the length S1 (height) of the first channel part 110a, the generation of step difference of the tread part TP may be further checked or prevented in the middle use period, which is relatively longer than the initial or terminal use period, of the tire 1A.

On the other hand, the formation of the first sipe part 10a and the second sipe part 10b in block parts BKa and BKb, different from each other, is described above, but the first sipe part 10a and the second sipe part 10b may be formed together in one block part BK.

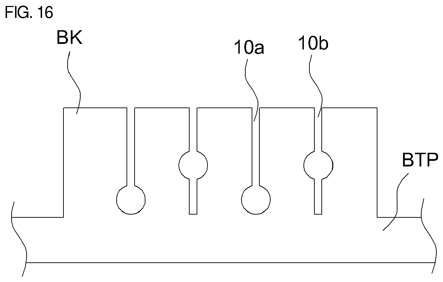

For example, as illustrated in FIG. 16 an example useful for understanding the invention, two first sipe part 10a and two second sipe part 10b may be formed and be alternately disposed in one block part BK.

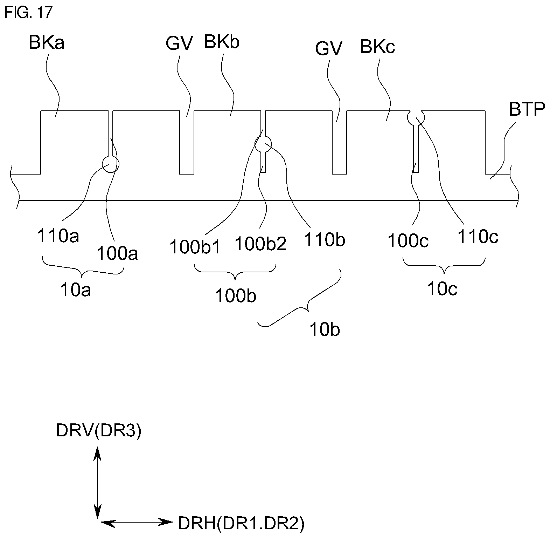

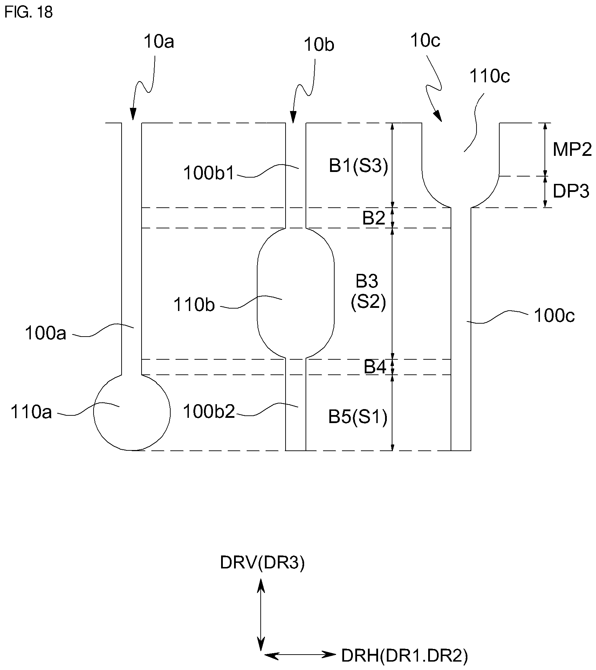

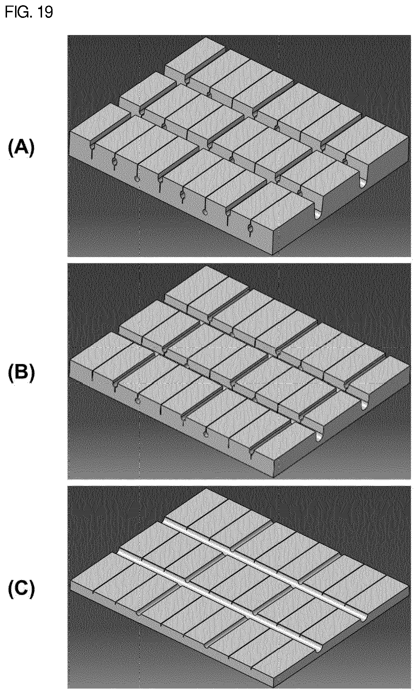

FIG. 17 is a view for describing a third example of the dissymmetric sipe parts useful for understanding the invention. FIGS. 18 and 19 are views for describing embodiments of the dissymmetric sipe according to the invention. Description of the portions described in detail above may be omitted in the following.

FIG. 17 shows that the tire 1A according to the present invention may further include a third block part BKc in which a third sipe part 10c is formed.

The third sipe part 10c may include a third channel part 110c and a third rift part 100c.

The third channel part 110c may be adjacent to the surface of the third block part BKc and extend to the surface of the third block part BKc.

The third rift part 100c may be positioned under the third channel part 110c and be connected to a lower portion of the third channel part 110c.

In this case, the vertical position of the first channel part 110a of the first sipe part 10a and the vertical positions of the second channel part 110b of the second sipe part 10b and the third channel part 110c of the third sipe part 10c may be different from each other.

The total depth, that is, the length in the vertical direction DRV, of the first sipe part 10a may be substantially the same as the total depth of the second sipe part 10b and the total depth of the third sipe part 10c.

FIG. 18 shows that the first rift part 100a, the 2-1 rift part 100b1, and the third channel part 110c may overlap each other in the horizontal direction DRH in a region B1 adjacent to the surface of the block part BK.

The firsts rift part 100a, the 2-1 rift part 100b1, and the third rift part 100c may overlap each other in a region B2 positioned under the region B1 with respect to the surface of the block part BK. Further, the third channel 110c and the second channel part 110b may overlap each other.

The first rift part 100a, the second channel part 110b, and the third rift part 100c may overlap each other in a region B3 positioned under the region B2 with respect to the surface of the block part BK.

The first rift part 100a, the 2-2 rift part 100b2, and the third rift part 100c may overlap each other in a region B4 positioned under the region B3 with respect to the surface of the block part BK. Further, the first channel part 110a and the second channel part 110b may overlap each other.

The first channel part 110a, the 2-2 rift part 100b2, and the third rift part 100c may overlap each other in a region B5 positioned under the region B4 with respect to the surface of the block part BK.

In this case, the length in the vertical direction, that is, the height S2, of the second channel part 110b is greater than the length S1 of the first channel part 110a in the vertical direction.

In addition, the length S3 of the third channel part 110c in the vertical direction may be less than or equal to the length S2 of the second channel part 110b in the vertical direction.

The first channel part 110a of the first sipe part 10a, the second channel part 110b of the second sipe part 10b, and the third channel part 110c of the third sipe part 10c may have shapes different from each other.

A more detailed look at the shape of the third channel part 110c shows that the third channel part 110c may include a second maintenance portion MP2 and a third diminishing portion DP3.

Here, the third diminishing portion DP3 may include a portion of which the width gradually diminishes toward the third rift portion 100c in the boundary portion between the third channel part 110c and the third rift part 100c.

The third maintenance portion MP3 may be positioned between the third diminishing portion DP3 and the surface of the third block part BKc and include a portion of which the width is maintained constant.

In this case, the generation of step difference may be prevented or checked even when the block part BK wears down.

For example, as illustrated in FIGS. 19A, 19B, and 19C, the first block part BKa, the second block part BKb, and the third block part BKc may have wear patterns different from each other in the initial, middle, and terminal use periods of the tire 1A.

Accordingly, the generation of step difference in the tread part TP may be checked or prevented.

It is to be understood that the embodiments described above are illustrative and not restrictive in all aspects, and the scope of the present invention is to be interpreted as being represented by the claims described below rather than the detailed description above.

## Claims

1. A tire including dissymmetric sipes, comprising:
a base tread part (BTP) positioned on an edge of the tire to include a portion having a ring shape;
a plurality of tread block parts (BK) formed on an outer surface of the base tread part (BTP);
a groove part formed between the tread block parts (BK); and
a plurality of sipe parts (10) formed in at least one of the tread block parts (BK), wherein each sipe part (10) forms a sipe and includes:
a rift part (100) including a gap in the tread block part (BK), and
a channel part (110) connected to the rift part (100) to have a greater width than the rift part (100), and
wherein radial (DRV, DR3) positions of the channel parts (110) in at least two of the sipe parts (10) are different from each other;
wherein a first sipe part (10a) and second sipe part (10b) of the plurality of sipe parts (10) are placed adjacent to each other in a circumferential and/or axial direction (DRH, DR1, DR2),
wherein the first sipe part (10a) includes:
a first rift part (100a) extending from a surface of the tread block part (BK); and
a first channel part (110a) connected to the first rift part (100a) and positioned radially (DRV, DR3) inward relative to the first part, and
wherein the second sipe part (10b) includes:
a first rift part portion (100b1) extending from the surface of the tread block part (BK);
a second channel part (110b) connected to the first rift part portion (100b1) and positioned radially (DRV, DR3) inward relative to the first rift part portion (100b1); and
a second rift part portion (100b2) connected to the second channel part (110b) and positioned radially (DRV, DR3) inward relative to the second channel part (110b);
wherein
the first rift part (100a) overlaps the first rift part portion (100b1) and the second channel part (110b) in the circumferential and/or axial direction (DRH, DR1, DR2) of the tread block part (BK), and
the first channel part (110a) overlaps the second rift part portion (100b2) in the circumferential and/or axial direction (DRH, DR1, DR2) of the tread block part (BK);
wherein the second channel part (110b) includes:
a first diminishing portion (DP1) including a portion in which width of the second channel part (110b) gradually diminishes toward the first rift part portion (100b1) in a boundary portion between the second channel part (110b) and the first rift part portion (100b1);
a second diminishing portion (DP2) including a portion in which the width of the second channel part (110b) gradually diminishes toward the second rift part portion (100b2) in a boundary portion between the second channel part (110b) and the second rift part portion (100b2); and
a first maintenance portion (MP1), which is positioned between the first diminishing portion (DP1) and the second diminishing portion (DP2) including a portion of which the width is maintained constant,
**characterized in that**
a cross-section of the first channel part (110a) in the radial direction (DRV, DR3) has a circular shape and a height of the second channel part (110b) in the radial direction (DRV, DR3) is greater than a height of the first channel part (110a) in the radial direction (DRV, DR3).

2. The tire of claim 1, wherein
the plurality of sipe parts (10) further includes a third sipe part (10c) adjacent to either one of the first sipe part (10a) and the second sipe part (10b), and
wherein the third sipe part (10c) includes:
a third channel part (110c) extending from the surface of the tread block part (BK); and
a third rift part (100c) connected to the third channel part (110c) and positioned radially (DRV, DR3) inward relative to the third channel part (110c).

3. The tire of claim 2, wherein
the third channel part (110c) overlaps the first rift part (100a) and the first rift part portion (100b1) in the circumferential and/or axial direction (DRH, DR1, DR2) of the tread block part (BK), and
the third rift part (100c) overlaps the first channel part (110a), the first rift part (100a), the second channel part (110b), and the second rift part portion (100b2) in the circumferential and/or axial direction (DRH, DR1, DR2) of the tread block part (BK).

4. The tire of claim 2, wherein the third channel part (110c) includes:
a third diminishing portion (DP3) including a portion in which width of the third channel part (110c) gradually diminishes toward the third rift part (100c) in a boundary portion between the third channel part (110c) and the third rift part (100c); and
a second maintenance portion (MP2), which is positioned between the third diminishing portion (DP3) and the surface of the tread block part (BK), including a portion of which the width is maintained constant.

## Patentansprüche

1. Ein Reifen, der unsymmetrische Lamellen umfasst, der folgende Merkmale aufweist:
ein Basislaufflächenteil (BTP), das an einer Flanke des Reifens positioniert ist, um einen Abschnitt zu umfassen, der eine Ringform aufweist;
eine Mehrzahl von Laufflächenblockteilen (BK), die an einer Außenfläche des Basislaufflächenteils (BTP) gebildet sind;
ein Rillenteil, das zwischen den Laufflächenblockteilen (BK) gebildet ist; und
eine Mehrzahl von Lamellenteilen (10), die in zumindest einem der Laufflächenblockteile (BK) gebildet sind, wobei jedes Lamellenteil (10) eine Lamelle bildet und folgende Merkmale umfasst:
ein Spaltteil (100), das einen Zwischenraum in dem Laufflächenblockteil (BK) umfasst, und
ein Kanalteil (110), das mit dem Spaltteil (100) verbunden ist, um eine größere Breite als das Spaltteil (100) aufzuweisen, und
wobei radiale (DRV, DR3) Positionen der Kanalteile (110) in zumindest zwei der Lamellenteile (10) voneinander verschieden sind;
wobei ein erstes Lamellenteil (10a) und ein zweites Lamellenteil (10b) der Mehrzahl von Lamellenteilen (10) in einer Umfangs- und/oder Axialrichtung (DRH, DR1, DR2) benachbart zueinander angeordnet sind,
wobei das erste Lamellenteil (10a) folgende Merkmale umfasst:
ein erstes Spaltteil (100a), das sich von einer Oberfläche des Laufflächenblockteils (BK) erstreckt; und
ein erstes Kanalteil (110a), das mit dem ersten Spaltteil (100a) verbunden und relativ zu dem ersten Teil radial (DRV, DR3) nach innen positioniert ist, und
wobei das zweite Lamellenteil (10b) folgende Merkmale umfasst:
einen ersten Spaltteilabschnitt (100b1), der sich von der Oberfläche des Laufflächenblockteils (BK) erstreckt;
ein zweites Kanalteil (110b), das mit dem ersten Spaltteilabschnitt (100b1) verbunden und relativ zu dem ersten Spaltteilabschnitt (100b1) radial (DRV, DR3) nach innen positioniert ist; und
einen zweiten Spaltteilabschnitt (100b2), der mit dem zweiten Kanalteil (110b) verbunden und relativ zu dem zweiten Kanalteil (110b) radial (DRV, DR3) nach innen positioniert ist;
wobei
das erste Spaltteil (100a) den ersten Spaltteilabschnitt (100b1) und das zweite Kanalteil (110b) in der Umfangs- und/oder Axialrichtung (DRH, DR1, DR2) des Laufflächenblockteils (BK) überlappt, und
das erste Kanalteil (110a) den zweiten Spaltteilabschnitt (100b2) in der Umfangs- und/oder Axialrichtung (DRH, DR1, DR2) des Laufflächenblockteils (BK) überlappt;
wobei das zweite Kanalteil (110b) folgende Merkmale aufweist:
einen ersten abnehmenden Abschnitt (DP1), der einen Abschnitt umfasst, in dem die Breite des zweiten Kanalteils (110b) in Richtung des ersten Spaltteilabschnitts (100b1) in einem Grenzabschnitt zwischen dem zweiten Kanalteil (110b) und dem ersten Spaltteilabschnitt (100b1) allmählich abnimmt;
einen zweiten abnehmenden Abschnitt (DP2), der einen Abschnitt umfasst, in dem die Breite des zweiten Kanalteils (110b) in Richtung des zweiten Spaltteilabschnitts (100b2) in einem Grenzabschnitt zwischen dem zweiten Kanalteil (110b) und dem zweiten Spaltteilabschnitt (100b2) allmählich abnimmt; und
einen ersten Aufrechterhaltungsabschnitt (MP1), der zwischen dem ersten abnehmenden Abschnitt (DP1) und dem zweiten abnehmenden Abschnitt (DP2) positioniert ist und einen Abschnitt umfasst, dessen Breite konstant gehalten wird,
**dadurch gekennzeichnet, dass**
ein Querschnitt des ersten Kanalteils (110a) in der radialen Richtung (DRV, DR3) eine Kreisform aufweist und eine Höhe des zweiten Kanalteils (110b) in der radialen Richtung (DRV, DR3) größer ist als eine Höhe des ersten Kanalteils (110a) in der radialen Richtung (DRV, DR3).

2. Der Reifen gemäß Anspruch 1, bei dem
die Mehrzahl von Lamellenteilen (10) ferner ein drittes Lamellenteil (10c) umfasst, das entweder zu dem ersten Lamellenteil (10a) oder zu dem zweiten Lamellenteil (10b) benachbart ist, und
wobei das dritte Lamellenteil (10c) folgende Merkmale umfasst:
ein drittes Kanalteil (110c), das sich von der Oberfläche des Laufflächenblockteils (BK) erstreckt; und
ein drittes Spaltteil (100c), das mit dem dritten Kanalteil (110c) verbunden und relativ zu dem dritten Kanalteil (110c) radial (DRV, DR3) nach innen positioniert ist.

3. Der Reifen gemäß Anspruch 2, bei dem
das dritte Kanalteil (110c) das erste Spaltteil (100a) und den ersten Spaltteilabschnitt (100b1) in der Umfangs- und/oder Axialrichtung (DRH, DR1, DR2) des Laufflächenblockteils (BK) überlappt, und
das dritte Spaltteil (100c) das erste Kanalteil (110a), das erste Spaltteil (100a), das zweite Kanalteil (110b) und den zweiten Spaltteilabschnitt (100b2) in der Umfangs- und/oder Axialrichtung (DRH, DR1, DR2) des Laufflächenblockteils (BK) überlappt.

4. Der Reifen gemäß Anspruch 2, bei dem das dritte Kanalteil (110c) folgende Merkmale aufweist:
einen dritten abnehmenden Abschnitt (DP3), der einen Abschnitt umfasst, in dem die Breite des dritten Kanalteils (110c) in Richtung des dritten Spaltteils (100c) in einem Grenzabschnitt zwischen dem dritten Kanalteil (110c) und dem dritten Spaltteil (100c) allmählich abnimmt; und
einen zweiten Aufrechterhaltungsabschnitt (MP2), der zwischen dem dritten abnehmenden Abschnitt (DP3) und der Oberfläche des Laufflächenblockteils (BK) positioniert ist und einen Abschnitt umfasst, dessen Breite konstant gehalten wird.

## Revendications

1. Pneu incluant des lamelles dissymétriques, comprenant :
une partie bande de roulement de base (BTP) positionnée sur un bord du pneu pour inclure une portion présentant une forme annulaire ;
une pluralité de parties blocs de bande de roulement (BK) formées sur une surface extérieure de la partie bande de roulement de base (BTP) ;
une partie rainure formée entre les parties blocs de bande de roulement (BK) ; et
une pluralité de parties lamelles (10) formées dans au moins l'une des parties blocs de bande de roulement (BK), dans lequel chaque partie lamelle (10) forme une lamelle et inclut :
une partie fente (100) incluant un espace dans la partie bloc de bande de roulement (BK), et
une partie canal (110) reliée à la partie fente (100) pour présenter une largeur supérieure à celle de la partie fente (100), et
dans lequel les positions radiales (DRV, DR3) des parties canaux (110) dans au moins deux des parties lamelles (10) sont différentes l'une de l'autre ;
dans lequel une première partie lamelle (10a) et une deuxième partie lamelle (10b) de la pluralité de parties lamelles (10) sont placées de manière adjacente l'une à l'autre dans une direction circonférentielle et/ou axiale (DRH, DR1, DR2),
dans lequel la première partie lamelle (10a) inclut :
une première partie fente (100a) s'étendant depuis une surface de la partie bloc de bande de roulement (BK) ; et
une première partie canal (110a) reliée à la première partie fente (100a) et positionnée radialement (DRV, DR3) vers l'intérieur par rapport à la première partie, et
dans lequel la deuxième partie lamelle (10b) inclut :
une première portion de partie fente (100b1) s'étendant depuis la surface de la partie bloc de bande de roulement (BK) ;
une deuxième partie canal (110b) reliée à la première portion de partie fente (100b1) et positionnée radialement (DRV, DR3) vers l'intérieur par rapport à la première portion de partie fente (100b1) ; et
une deuxième portion de partie fente (100b2) reliée à la deuxième partie canal (110b) et positionnée radialement (DRV, DR3) vers l'intérieur par rapport à la deuxième partie canal (110b) ;
dans lequel
la première partie fente (100a) chevauche la première portion de partie fente (100b1) et la deuxième partie canal (110b) dans la direction circonférentielle et/ou axiale (DRH, DR1, DR2) de la partie bloc de bande de roulement (BK), et
la première partie canal (110a) chevauche la deuxième portion de partie fente (100b2) dans la direction circonférentielle et/ou axiale (DRH, DR1, DR2) de la partie bloc de bande de roulement (BK) ;
dans lequel la deuxième partie canal (110b) inclut :
une première portion de diminution (DP1) incluant une portion dans laquelle la largeur de la deuxième partie canal (110b) diminue progressivement vers la première portion de partie fente (100b1) dans une portion frontière entre la deuxième partie canal (110b) et la première portion de partie fente (100b1) ;
une deuxième portion de diminution (DP2) incluant une portion dans laquelle la largeur de la deuxième partie canal (110b) diminue progressivement vers la deuxième portion de partie fente (100b2) dans une portion frontière entre la deuxième partie canal (110b) et la deuxième portion de partie fente (100b2) ; et
une première portion de maintenance (MP1), qui est positionnée entre la première portion de diminution (DP1) et la deuxième portion de diminution (DP2) incluant une portion dont la largeur est maintenue constante,
**caractérisé en ce que**
une section transversale de la première partie canal (110a) dans la direction radiale (DRV, DR3) présente une forme circulaire et une hauteur de la deuxième partie canal (110b) dans la direction radiale (DRV, DR3) est supérieure à une hauteur de la première partie canal (110a) dans la direction radiale (DRV, DR3).

2. Pneu selon la revendication 1, dans lequel
la pluralité de parties lamelles (10) inclut en outre une troisième partie lamelle (10c) adjacente à l'une ou l'autre de la première partie lamelle (10a) et de la deuxième partie lamelle (10b), et
dans lequel la troisième partie lamelle (10c) inclut :
une troisième partie canal (110c) s'étendant depuis la surface de la partie bloc de bande de roulement (BK) ; et
une troisième partie fente (100c) reliée à la troisième partie canal (110c) et positionnée radialement (DRV, DR3) vers l'intérieur par rapport à la troisième partie canal (110c).

3. Pneu selon la revendication 2, dans lequel
la troisième partie canal (110c) chevauche la première partie fente (100a) et la première portion de partie fente (100b1) dans la direction circonférentielle et/ou axiale (DRH, DR1, DR2) de la partie bloc de bande de roulement (BK), et
la troisième partie fente (100c) chevauche la première partie canal (110a), la première partie fente (100a), la deuxième partie canal (110b) et la deuxième portion de partie fente (100b2) dans la direction circonférentielle et/ou axiale (DRH, DR1, DR2) de la partie bloc de bande de roulement (BK).

4. Pneu selon la revendication 2, dans lequel la troisième partie canal (110c) inclut :
une troisième portion de diminution (DP3) incluant une portion dans laquelle la largeur de la troisième partie canal (110c) diminue progressivement vers la troisième de partie fente (100c) dans une portion frontière entre la troisième partie canal (110c) et la troisième partie fente (100c) ; et
une deuxième portion de maintenance (MP2), qui est positionnée entre la troisième portion de diminution (DP3) et la surface de la partie bloc de bande de roulement (BK), incluant une portion dont la largeur est maintenue constante.
